(19) Europäisches Patentamt / European Patent Office / Office européen des brevets

(11) **EP 3 824 573 B1**

## (12) EUROPEAN PATENT SPECIFICATION

(45) Date of publication and mention
of the grant of the patent:
**19.03.2025 Bulletin 2025/12**

(21) Application number: **18743744.7**

(22) Date of filing: **16.07.2018**

(51) International Patent Classification (IPC):
*H04J 3/06* (2006.01)

(52) Cooperative Patent Classification (CPC):
**H04J 3/0667; H04J 3/0673**

(86) International application number:
**PCT/EP2018/069289**

(87) International publication number:
**WO 2020/015813 (23.01.2020 Gazette 2020/04)**

(54) **PEER-TO-PEER TRANSPARENT CLOCKS AND METHODS OF ESTIMATING SKEW IN PEER-TO-PEER TRANSPARENT CLOCKS**

PEER-TO-PEER-TRANSPARENTE UHREN UND VERFAHREN ZUM SCHÄTZEN VON SKEW IN PEER-TO-PEER TRANSPARENTEN UHREN

HORLOGES TRANSPARENTES ENTRE HOMOLOGUES ET PROCÉDÉS D'ESTIMATION DE BIAIS DANS DES HORLOGES TRANSPARENTES ENTRE HOMOLOGUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.05.2021 Bulletin 2021/21**

(73) Proprietors:
• **Khalifa University of Science and Technology**
**Abu Dhabi (AE)**
• **British Telecommunications Public Limited Company**
**London, Greater London EC1A 7AJ (GB)**
• **Emirates Telecommunications Corporation**
**Abu-Dhabi (AE)**

(72) Inventor: **AWEYA, James**
**Abu Dhabi (AE)**

(74) Representative: **J A Kemp LLP**
**80 Turnmill Street**
**London EC1M 5QU (GB)**

(56) References cited:
**CN-A- 102 546 142      US-A1- 2016 170 439**

• JIHO HAN ET AL: "Practical considerations in the design and implementation of time synchronization systems using IEEE 1588", IEEE COMMUNICATIONS MAGAZINE, IEEE SERVICE CENTER, PISCATAWAY, US, vol. 47, no. 11, 1 November 2009 (2009-11-01), pages 164 - 170, XP011284169, ISSN: 0163-6804, DOI: 10.1109/ MCOM.2009.5307481
• GEOFFREY M GARNER HUAWEI TECHNOLOGIES CO ET AL: "Equivalence of the IEEE 1588 Boundary Clock and Peer-to-Peer Transparent Clock for Synchronization Transport;C 1001", ITU-T DRAFT ; STUDY PERIOD 2009-2012, INTERNATIONAL TELECOMMUNICATION UNION, GENEVA ; CH, vol. 13/15, 20 May 2010 (2010-05-20), pages 1 - 8, XP017447695
• XU XIONG ET AL: "A New Time Synchronization Method for Reducing Quantization Error Accumulation Over Real-Time Networks: Theory and Experiments", IEEE TRANSACTIONS ON INDUSTRIAL INFORMATICS, IEEE SERVICE CENTER, NEW YORK, NY, US, vol. 9, no. 3, 1 August 2013 (2013-08-01), pages 1659 - 1669, XP011524317, ISSN: 1551-3203, [retrieved on 20130816], DOI: 10.1109/TII.2013.2238547

**Description**

Field of the Invention

The present invention relates peer-to-peer transparent clocks and methods of estimating skew in peer-to-peer transparent clocks. It is particularly, but not exclusively, concerned with techniques for estimating clock skew between a free-running clock in a transparent clock and a master clock.

Background of the Invention

IEEE 1588 PTP is a two-way time/frequency transfer protocol wherein a GrandMaster (master) clock generates messages (packets) with precise timestamps that are sent downstream to slave devices. The slave devices also exchange messages with the GrandMaster via a delay measurement mechanism to obtain timestamps in order to derive an accurate estimate of the GrandMaster clock. Devices between the master and slave clocks may be ordinary switches and routers, or specialized equipment with on-path support, such as transparent clocks (TCs), that can be used to mitigate the effects of timing impairments introduced by the network between the master and slave.

TCs were introduced in IEEE 1588 Version 2 to allow a synchronization network to measure the actual delays synchronization packets experience and to communicate these delay measurements to slaves. The slaves can then adjust their clocks while compensating for the actual delay variations. For most accurate residence time measurements, the PTP clocks in each TC should be syntonized (synchronized in frequency) with the GrandMaster. Accurate residence time measurements determine to a large extent how accurate the clock synchronization at the slave will be. However, the clock skews (or frequency differences) between the clocks at the TCs on the path and the GrandMaster can render the residence time measurements inaccurate. To obtain more accurate measurements at the TCs, the clock skews have to be accurately estimated and removed from (or compensated for in) the measurements.

One way to do so is to physically tune the frequency of the TC clocks to be syntonized to the GrandMaster clock. The accurately syntonized TC clocks can then be used for residence time measurements. Alternatively, syntonization may be handled on the TC processor (in software) without physically adjusting the rate of the TC clocks, that is, the TCs use free-running clocks. The computed clock skew (between the free-running TC clock and GrandMaster) may be used by the TC to modify the measured residence times inserted into Sync/Follow_Up messages.

There are currently two main methods used to syntonize the TC clocks. One is using Synchronous Ethernet (SyncE) (defined in ITU-T Recommendations G.8261, G.8262, and G.8264) which is a timing transfer method that passes timing over the Physical Layer of Ethernet using SONET/SDH-like timing techniques. The main limitation of this method is that it cannot be applied over networks (even Ethernet) which have already been deployed without such timing transfer capabilities. An implementation will require an all SyncE network on the path linking the GrandMaster and the TC. In such an implementation, the timing signal carried by SyncE is used to frequency lock the TC oscillator is to the GrandMaster The other method is to generate syntonization signals from timestamps captured from Sync messages (only) sent from the GrandMaster to the slave device. The syntonization signal can be used to physically tune the TC oscillator or modify the measured residence times. The example methods described in the IEEE 1588 Version 2 Standard for generating the syntonization signals are very simplistic (using Sync messages only and simple linear estimation techniques) and generally do not provide accurate syntonization.

**Overview of IEEE 1588v2 PTP**

The GrandMaster (GM) is the root timing reference in a domain and transmits synchronization information to the clocks residing in its domain. In IEEE 1588v2 PTP messages are categorized into event and general messages. All IEEE 1588 PTP messages have a common header. Event messages are timed messages in that an accurate timestamp is generated at both transmission and receipt of each message. Event messages have to be accurately timestamped since the accuracy in transmission and receipt timestamps directly affects clock distribution accuracy.

A timestamp event is generated at the time of transmission and reception of any event message. General messages are not required to be timestamped. The set of event messages consists of Sync, Delay_Req, Pdelay_Req, and Pdelay_Resp. The set of general messages consists of Announce, Follow_Up, Delay_Resp, Pdelay_Resp_Follow_Up, Management, and Signaling.

IEEE 1588 PTP allows for two different types of timestamping methods, either one-step or two-step. One-step clocks update time information within event messages (Sync and Delay-Req) on-the-fly, while two-step clocks convey the precise timestamps of packets in general messages (Follow_Up and Delay-Resp).

The Sync, Delay_Req, Follow_Up, and Delay_Resp messages are used to generate and communicate the timing information needed to synchronize ordinary and boundary clocks (see description below) using the delay request-response mechanism. A Sync message is transmitted by a GM to its slaves and either contains the exact time of its transmission or is followed by a Follow_Up message containing this time. In a two-step ordinary or boundary clock, the Follow_Up message communicates the value of the departure timestamp for a particular Sync message. A Delay_Req message is a request for the receiving node to return the time at which the Delay_Req message was received, using a Delay_Resp message.

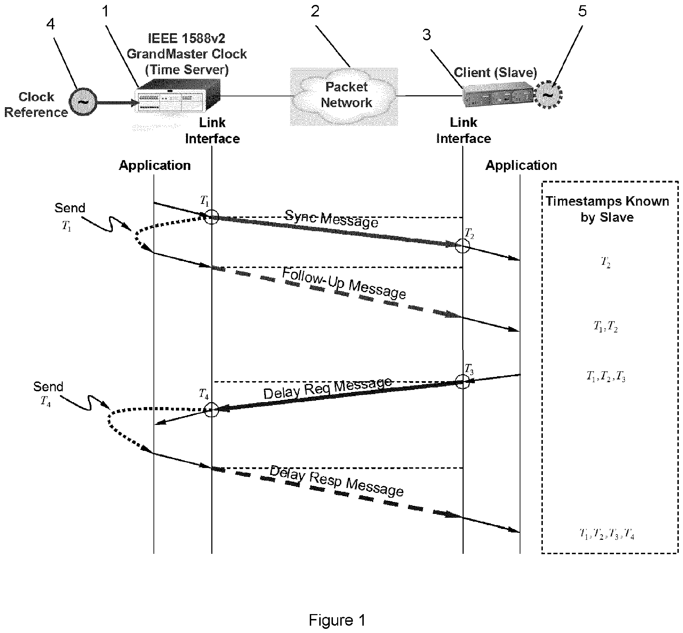

The basic pattern of synchronization message exchanges for the one-step and two-step clocks are illustrated in Figure 1. The message exchange pattern for the two-step clock can be explained as follows. The GM 1 sends a Sync message to the slave 3 over a packet network 2 and notes the time $T_1$ at which it was sent according to the GM clock 4. The slave 3 receives the Sync message and notes the time of reception $T_2$ according to the slave clock 5. The GM 1 conveys to the slave the timestamp $T_1$ by one of two ways: 1) Embedding the timestamp $T_1$ in the Sync message (one-step clock). This requires some sort of hardware processing (i.e., hardware timestamping) for highest accuracy and precision. 2) Embedding the timestamp $T_1$ in a Follow_Up message (two-step clock). Next, the slave 3 sends a Delay_Req message to the GM 1 and notes the time $T_3$ at which it was sent according to the slave clock 5. The GM 1 receives the Delay_Req message and notes the time of reception $T_4$ according to the GM clock 4. The GM 1 conveys to the slave the timestamp $T_4$ by embedding it in a Delay_Resp message.

At the end of this PTP messages exchange, the slave 3 possesses all four timestamps $\{T_1, T_2, T_3, T_4\}$. These timestamps may be used to compute the offset of the slave clock 5 with respect to the GM clock 4 and the mean propagation time of messages between the two clocks. The computation of offset and propagation time often assumes that the GM-to-slave and slave-to-GM propagation times are equal - i.e. a symmetrical communication path.

**Transparent Clocks**

A TC acts invisibly to the GM and slave from a synchronization perspective by providing a timestamp correction term to PTP event messages traversing the TC. There are two forms of transparent clocks. The end-to-end (E2E) TC provides a correction that reflects the residence time (or dwell-time) of the packet within the equipment itself. A peer-to-peer (P2P) TC includes in the correction its own internal delay as well as an estimate of the link delay between itself and its upstream device.

TCs are PTP devices that operate as normal switches, but they update the correction field *(correctionField)* of the PTP packets with a value equal to their residence time, that is, the time the packet was delayed in the switch (E2E TCs), or the residence time plus the peer link delay (P2P TCs). The purpose of the TC function providing on-path support is to remove the effect of PDV by informing downstream devices of precisely what these delays were on a packet-by-packet basis.

An End-to-End (E2E) TC is a multi-port device that is not a master or slave clock but a bridge between the two. E2E TCs only measure the time taken for a PTP event message (Sync and Delay_Req) to transit the bridge and provide this information to the receiving slave clocks in the correction field. The E2E TC does not include the propagation delay of the upstream link connected to the ingress port through which the message arrived. This information is not added to the correction field by the E2E TC.

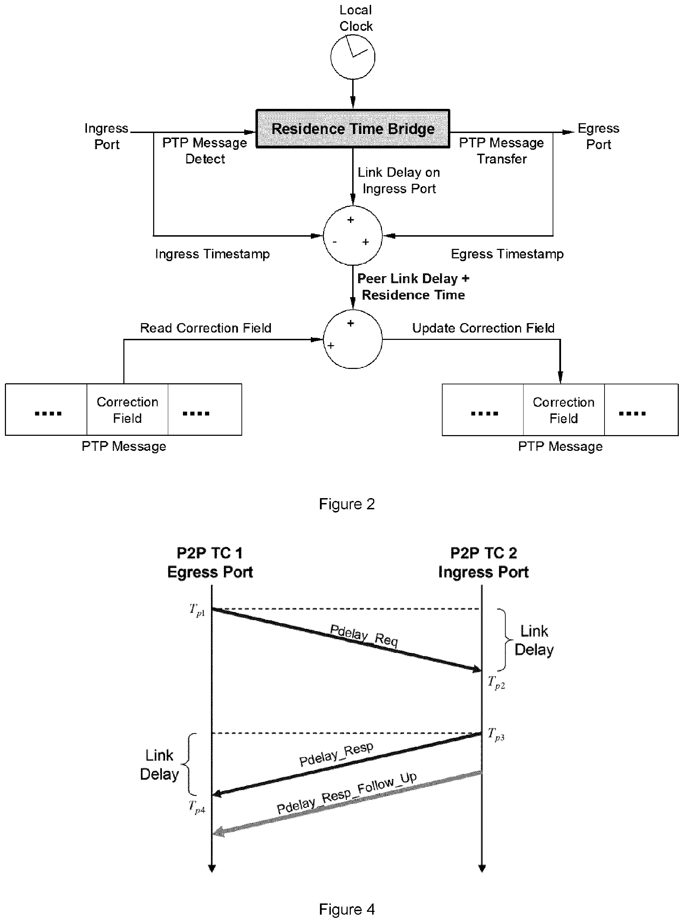

A P2P TC is also a multi-port device that is not a master or slave clock but a bridge between the two. This clock determines the residence time of a Sync message through the switch. It also determines the delay of the inbound path (link) using the PTP peer delay mechanism. Both values are added up and placed in the correction field of the Sync message or associated Follow_Up message (Figure 2).

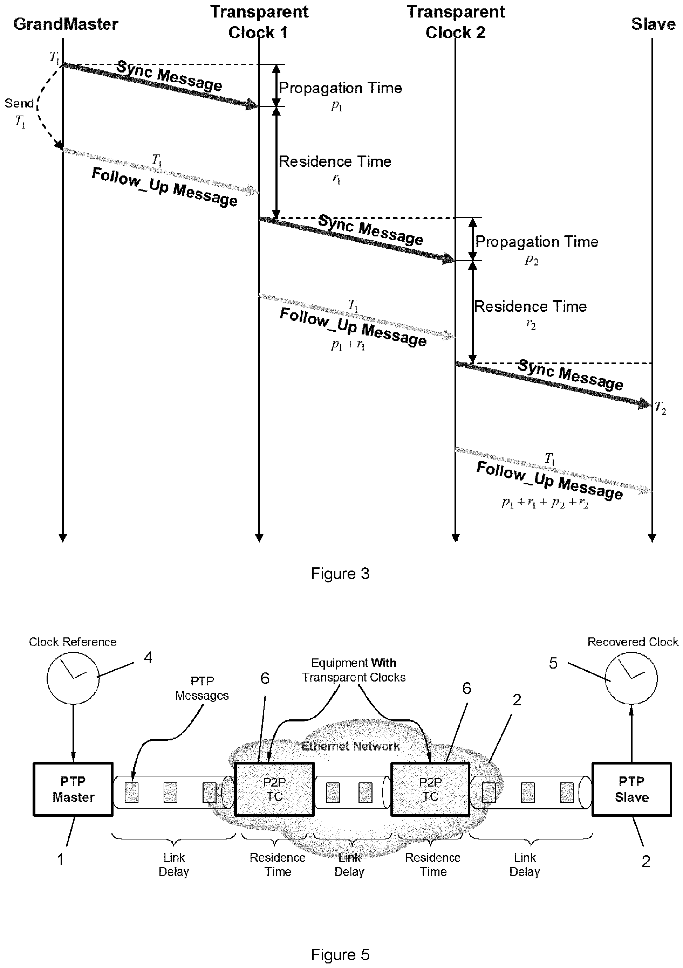

In the end-to-end approach (i.e., networks with E2E TCs), delay measurement messages (Sync, Follow_Up, Delay_Req, and Delay_Resp messages) are exchanged between the master and the slave using the PTP Delay Request-Response measurement mechanism. In the peer-to-peer approach (i.e., networks with P2P TCs) the master still sends Sync and Follow_Up messages to the slave clock just as in the end-to-end approach except no Delay_Req and Delay_Resp messages are exchanged. A P2P TC forwards and modifies Sync and Follow_Up messages only to compensate for residence time and peer uplink delay (Figure 3). A one-step P2P TC updates for switch delay in Sync messages as they pass **through** the switch while a two-step TC updates a field in the non time-critical general message (Follow_Up).

The upstream link delay is the estimated packet propagation delay between the upstream neighbor P2P TC and the P2P TC under consideration. The correction field of the message received by the slave contains the sum of all residence times and link delays. In theory this is the total end-to-end delay (from master to slave) of the Sync packet.

P2P TCs use the following event messages for peer delay measurements: Pdelay_Req Pdelay_Resp, and Pdelay_Resp_Follow_Up. These messages are sent in the sequence shown in Figure 4. In the peer-to-peer approach, each device on the network exchanges peer-delay measurement messages. This allows each device to keep track of the delays between itself and its immediately connected neighbors.

Each device periodically initiates an exchange of peer-delay messages on every connected port. The peer delay mechanism measures the port-to-port propagation time, i.e., the link delay, between two communicating ports supporting the peer delay mechanism. The link delay measurements are made independently by each port implementing the peer delay mechanism. This means that the link delay is known by ports on both ends of a link. This allows path length corrections to be made immediately upon reconfiguration of the network.

With this requirement and given two P2P TCs, TC1 and TC2 (Figure 4), TC1 (upstream) initiates the peer delay mechanism to TC2 (downstream). Similarly, TC2 initiates an independent peer delay mechanism to TC1. TC2 initiates the same series of messages in the reverse direction so that both clocks know the peer-delay. However, TC2 is the TC (and not TC1) that updates the peer link delay in the Sync (or Follow_Up) message for the peer link under consideration. This is to avoid double link delay updating for a peer link under consideration. At the end of this PTP messages exchange, the downstream P2P TC possesses all four timestamps $\{T_{p1}, T_{p2}, T_{p3}, T_{p4}\}$. These timestamps are then used to compute the upstream link delay.

In a peer-to-peer network, all links are periodically measured, so the delay between the master and slave are readily known when the network path/topology changes. Note that peer-delay messages are exchanged even on ports blocked to prevent loops, such as by the Rapid Spanning Tree Protocol.

As the process in Figure 3 continues hop by hop (where $N$ is the number of hops or links), the Sync or Follow-Up Messages maintain a running total of the residence and propagation times; resulting in a grand total delay value from master to slave:

$$total\_residence\_time\_plus\_propagation\_delay = d_{total} = \sum_{i=1}^{N-1} r_i + \sum_{i=1}^{N} p_i \qquad (1)$$

Upon receipt of the final Sync or Follow-Up Message, the slave device calculates its offset. It is noted here that although the sum of the propagation and residence delays at each TC (p1, r1, p2, r2, ....) is included in the Sync message's associated Follow-Up's offset correction field, the final propagation delay from the last TC to the slave device must be included in order to fully capture the end-to-end delay (Figure 3).

Time transfer using P2P TCs involves using the residence plus total propagation delay (in P2P TCs) at slave to mitigate PDV effects (Figure 5). The IEEE 1588 does not describe how this should be done but left to vendor/user implementation. The standard does not specify how the clock recovery mechanism at the receiver should be implemented.

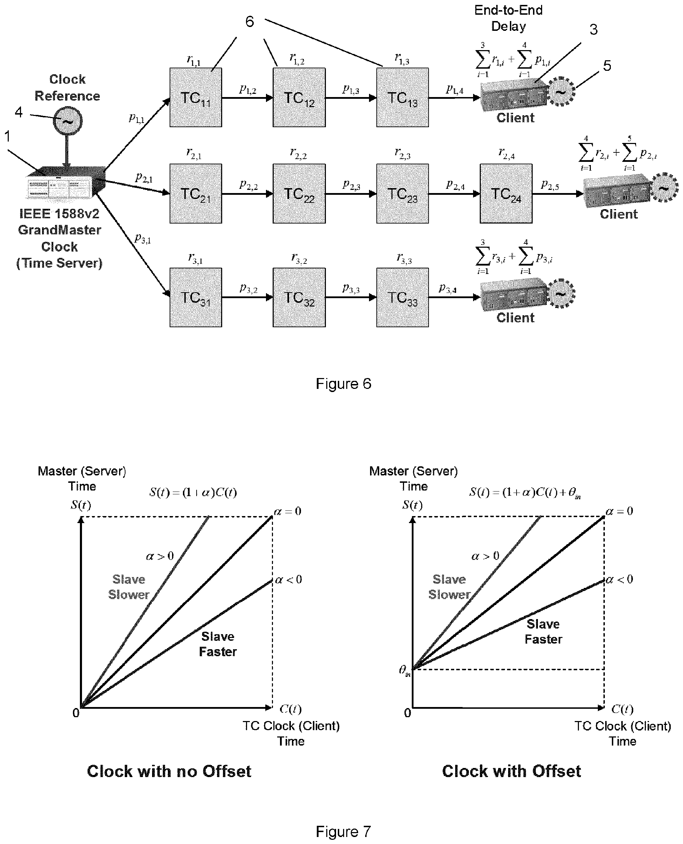

In Figure 6, the transparent clock devices on the communication path to each slave measure the peer link delay and the delay the Sync packet resides in the TC device and increments the correction field in the PTP header. By doing so, the slave clock or boundary clock further down the line can determine how long the Sync packet resided in the TC devices before it. The slave can then use the values in the correction field to reduce the effects PDV on its path.

Advantages of using Syntonized or Skew Compensated Transparent Clocks

Syntonizing or compensating for the skew can help in improving residence time measurement accuracy. As explained above, accurate residence time measurements enable accurate synchronization at the slave. Consider the case where a TC clock is not syntonized or contains a free-running oscillator with frequency accuracy (or skew) $\alpha_{free}$ no worse than $\pm 100$ ppm. If residence time is measured using this oscillator, there will be an error on the order of the residence time multiplied by the actual frequency offset $\alpha_{free}$.

Let $r_{ideal}$ be the ideal residence time (when the TC is accurately syntonized to the GM) and $r_{act}$ be the actual measured residence time when the TC is not accurately syntonized or the TC is using a free-running oscillator and has skew of $\alpha_{free}$. With this we have,

$$r_{act} = (1 + \alpha_{free})r_{ideal} = r_{ideal} + \alpha_{free}r_{ideal} = r_{ideal} + r_{error}, \qquad (2)$$

In the above equation, $r_{error}$ is the (positive or negative) error in the residence time measurement when the skew is non-zero and is $\alpha_{free}$.

Optimum synchronization performance is obtained when all TCs on a synchronization path are frequency locked (syntonized) to the GM clock. If a TC is not frequency synchronized to the GM, a TC with a $\pm 100$ ppm accuracy will contribute a measurement error of $\pm (0.0001 \times 10$ ms$) = \pm 1$ $\mu$s (or $\pm 1000$ ns) to the residence time if the ideal residence time is 10 ms. However, a positive effect is that oscillator do not typically operate at the extreme ends of their accuracy limits.

To reduce this error, IEEE 1588 Version 2 allows the TC to be syntonized, i.e., synchronized in frequency, to the GM. Each TC will use its own internal mechanisms to measure frequency offset relative to the GM and to synthesize a frequency signal that is syntonized with the GM. This synthesis may be done via hardware, firmware, or software.

Assume a network with nodes having standard Ethernet oscillators, with nominal frequencies of 25 MHz for 100 Mbit/s Ethernet and 125 MHz for 1 Gbit/s Ethernet. This means that the phase measurement granularity in the TC and ordinary clock can be as much as 40 ns for 100 Mbits/s Ethernet. Additional phase error will result from the variable component of latency in the Ethernet physical layer (PHY) (the fixed component can be specified by the manufacturer in the design).

Considering the case of a syntonized TC local oscillator. If the frequency offset between the GM and TC oscillator is measured and a syntonized frequency is created, the use of this frequency for the TC delay computation will greatly reduce the magnitude of the TC measurement errors. The phase step magnitude will now be on the order of the syntonized frequency measurement accuracy multiplied by the synch interval.

For example, if the phase measurement granularity is 40 ns (assuming a 25 MHz oscillator for 100 Mbit/s Ethernet) and the TC oscillator frequency offset is measured/syntonized over 100 ms (to be at this phase granularity or, in other words, frequency), then the measured frequency offset or skew is $40 \times 10^{-9}$s/0.1 s $= 400 \times 10^{-9} = 0.4$ ppm (parts-per-million). The TC measurement error or offset now is $(400 \times 10^{-9})(0.01$ s$) = 4$ ns, i.e., the TC measurement error is reduced from the 1000 ns computed when an unsyntonized clock or free-running local oscillator is used for the measurement by a factor of 250.

In practice, the reduction will not be this large because other effects are present, e.g., oscillator phase noise and drifts due to temperature effects, phase measurement error due to the variable portion of the PHY latency, and frequency measurement granularity.

For most accurate residence time measurements, the clocks in each TC should be syntonized with the GM. Syntonization only requires correction to the TC oscillator frequency. The TC host processor can use the ingress timestamps from Sync messages to determine a frequency (rate) correction required for the TC clock. Alternatively, syntonization may be handled on the TC host processor without adjusting the frequency of the TC clocks. The frequency correction may be used to modify the computed residence times inserted into Sync/Follow_Up messages.

CN 102,546,142A discloses a frequency synchronous method of an IEEE1588 transparent clock and a storage and forward mode of synchronous messages. The frequency synchronous method includes that (1) a main clock periodically sends Sync messages, and the transparent clock passively receives and forwards the Sync messages; (2) the transparent clock records a receiving timestamp when the Sync messages reach the transparent clock and a sending timestamp when the Sync messages leave the main clock; (3) the transparent clock also records a sending timestamp and a receiving timestamp of next Sync message; (4) the method respectively obtains time that one Sync message gap uses to pass the main clock and the transparent clock; (5) the time ratio is utilized to obtain ratio of clock crystal oscillator frequency between the main clock and the transparent clock; and (6) the ratio of the clock crystal oscillator frequency is utilized to modify residence time.

J. Han et al. in "Practical considerations in the design and implementation of time synchronization systems using IEEE 1588", IEEE Communications Magazine, vol. 47, no. 11, 1 November 2009 pp. 164-170 discusses key features in the IEEE 1588 standard and the exact causes and practical handling of time errors. A prototype Gigabit Ethernet switch based on a model of a combined ordinary clock and a peer-to-peer transparent clock is described to demonstrate how design decisions have been made on the overall architecture and on the functions of building blocks. This article also discusses considerations for implementing IEEE 1588-based systems that are robust, cost-effective, and precise in solving the shared synchronized time problem.

US 2016/170439A discloses methods and devices for time synchronization. The disclosure has particular application in the alignment of slave clocks to a master clock and in dealing with packet delay variation and dynamic asymmetries in the network links between them. In embodiments of the invention, the slave clock uses the peer link delay and residence times measured by peer-to-peer transparent clocks to compensate for clock synchronization errors that arise due to variability in message transfer delays.

An object of the present invention is to provide techniques that allow a P2P TC with free-running local clock to use timing message timestamps intercepted by the TC for accurate clock skew estimation.

A further object of the present invention is to improve the accuracy of the residence times computed by a P2P TC.

Summary of the Invention

At their broadest, aspects of the present invention provide for methods and systems for estimating the skew of a local clock in an peer-to-peer transparent clock device using information from timing messages passing between a master and slave device through that transparent clock device.

A first aspect of the present invention provides a method of estimating the skew of a local clock according to claim 1.

In this way the skew of the local clock can be accurately estimated using the existing pattern of timing messages exchanged between the master and slave devices and without the need for physical synchronization or use of separate timing messages.

Further, by taking account of the delays experienced by messages passing from the master device to the transparent clock device, a more accurate estimation of the skew of the local clock may be obtained.

Preferably the timing messages are messages under the IEEE 1588 PTP.

Preferably the method further includes the step of syntonizing the local clock to the master clock. By syntonizing (synchronizing the frequency) the local clock to the master clock, the timing information provided by the transparent clock can be made more accurate, but without the need for physical syntonization. The syntonization can be achieved by post-processing the output of a free-running local clock.

**Preferably** the method further includes the step of computing modified residence times in the transparent clock device using the estimated skew of the local clock and/or computing modified delays between the transparent clock device and other upstream devices over the network. By computing more accurate residence times in the transparent clock device, the accuracy of the synchronization of a clock in the slave device to the master clock can be improved as more accurate information regarding the delays in the network between the master and the salve device can be provided. Ideally, all transparent clocks between the master and the slave would compute modified residence times in this manner, but improvements will result even if only one of the transparent clocks operates in this manner.

Preferably the step of computing modified residence times uses a filtered value of the skew, for example using an exponentially weighted moving average filter.

The method may also include the step of the transparent clock device determining the delays between itself and neighbouring transparent clock devices and/or the master device. This may be done by the transparent clock device exchanging timing messages with neighbouring devices over the network.

In certain embodiments, the step of estimating the skew of the local clock is a linear approximation. For example, the step of estimating may include calculating the skew $\alpha$ as:

$$\alpha = \frac{(T_{1,n} - T_{1,n-1}) + (d_{total,n} - d_{total,n-1})}{(T_{2TC,n} - T_{2TC,n-1})} - 1$$

wherein $T_{1,n}$ is the departure time of the nth timing message sent from the master device to the slave device, $T_{2TC,n}$ is the arrival time of the nth timing message sent from the master device to the slave device at the transparent clock device and $d_{total,n}$ is the total delay experienced by the nth timing message in passing from the master device to the transparent clock device.

In certain embodiments the step of estimating the skew of the local clock includes operating a Kalman filter. For example a Kalman filter may be operated using the measurement equation

$$\underbrace{(T_{1,n} - T_{2TC,n}) + d_{total,n}}_{y_n} = \underbrace{\theta_n}_{D_n X_n} + v_n$$

and the state equation

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

wherein $\theta_n$ and $\alpha_n$ are the total offset and skew during the nth exchange of timing **messages,** $T_{1,n}$ is the departure time of the nth timing message sent from the master device to the slave device, $T_{2TC,n}$ is the arrival time of the nth timing message sent from the master device to the slave device at the transparent clock device, $d_{total,n}$ is the total delay including the cumulative residence time of the nth timing message sent from the master device to the slave device in other transparent clock devices whilst travelling between the master device and the transparent clock device, $y = (T_{1,n} - T_{2TC,n}) + d_{total,n}$ is a scalar, n is a nonnegative time index, $D_n = [2\ 0]$ is a 1×2 matrix, $X_n^T = [\theta_n \quad \alpha_n]$ is a vector, $v_n$ is the measurement noise, and $w_n^T = [w_{\theta,n} \quad w_{\alpha,n}]$ is a process noise vector.

Embodiments using a Kalman filter such as that above can also estimate the offset of the local clock compared to the master clock.

The method of the present aspect may include any combination of some, all or none of the above described preferred and optional features.

The method of the above aspect is preferably implemented by a transparent clock device according to the second aspect of this invention, or a networked time system according to the third aspect of this invention, as described below, but need not be.

Further aspects of the present invention include computer programs for running on computer systems which carry out the method of the above aspect, including some, all or none of the preferred and optional features of that aspect.

A second aspect of the present invention provides a peer-to-peer transparent clock device according to claim 6.

In this way the skew of the local clock can be accurately estimated using the existing pattern of timing messages exchanged between the master and slave devices and without the need for physical synchronization or use of separate timing messages.

Further, by taking account of the delays experienced by messages passing from the master device to the transparent clock device, a more accurate estimation of the skew of the local clock may be obtained.

Preferably the timing messages are messages under the IEEE 1588 PTP.

Preferably the processor is further arranged to syntonize the local clock to the master clock. By syntonizing (synchronizing the frequency) the local clock to the master clock, the timing **information** provided by the transparent clock can be made more accurate, but without the need for physical syntonization. The syntonization can be achieved by post-processing the output of a free-running local clock.

Preferably the processor is further arranged to compute modified residence times in the transparent clock device using the estimated skew of the local clock. By computing more accurate residence times in the transparent clock device, the accuracy of the synchronization of a clock in the slave device to the master clock can be improved as more accurate information regarding the delays in the network between the master and the salve device can be provided. Ideally, all transparent clocks between the master and the slave would compute modified residence times in this manner, but improvements will result even if only one of the transparent clocks operates in this manner.

Preferably the step of computing modified residence times uses a filtered value of the skew, for example using an exponentially weighted moving average filter.

The transparent clock device may also be arranged to determine the delays between itself and neighbouring transparent clock devices and/or the master device. This may be done by the transparent clock device exchanging timing messages with neighbouring devices over the network.

In certain embodiments the processor is arranged to estimate the skew of the local clock using a linear approximation. For example the estimation made be done by calculating the skew $\alpha$ as:

$$\alpha = \frac{(T_{1,n} - T_{1,n-1}) + (d_{total,n} - d_{total,n-1})}{(T_{2TC,n} - T_{2TC,n-1})} - 1$$

wherein $T_{1,n}$ is the departure time of the nth timing message sent from the master device to the slave device, $T_{2TC,n}$ is the arrival time of the nth timing message sent from the master device to the slave device at the transparent clock device and $d_{total,n}$ is the total delay experienced by the nth timing message in passing from the master device to the transparent clock device.

In certain embodiments the processor is arranged to estimate the skew of the local clock by operating a Kalman filter. For example a Kalman filter may be operated using the measurement equation

$$\underbrace{(T_{1,n} - T_{2TC,n}) + d_{total,n}}_{y_n} = \underbrace{\theta_n}_{D_n X_n} + v_n$$

and the state equation

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

**wherein** $\theta_n$ and $\alpha_n$ are the total offset and skew during the nth exchange of timing messages, $T_{1,n}$ is the departure time of the nth timing message sent from the master device to the slave device, $T_{2TC,n}$ is the arrival time of the nth timing message sent from the master device to the slave device at the transparent clock device, $d_{total,n}$ is the cumulative residence time of the nth timing message sent from the master device to the slave device in other transparent clock devices whilst travelling between the master device and the transparent clock device, $y = (T_{1,n} - T_{2TC,n}) + d_{total,n}$ is a scalar, n is a nonnegative time index, $D_n = [2\ 0]$ is a 1×2 matrix, $X_n^T = \begin{bmatrix} \theta_n & \alpha_n \end{bmatrix}$ is a vector, $v_n$ is the measurement noise, and $w_n^T = \begin{bmatrix} w_{\theta,n} & w_{\alpha,n} \end{bmatrix}$ is a process noise vector.

Embodiments using a Kalman filter such as that above can also estimate the offset of the local clock compared to the master clock.

The device of the present aspect may include any combination of some, all or none of the above described preferred and optional features.

A third aspect of the present invention provides a networked time system according to claim 11.

In this way the skew of the local clock can be accurately estimated using the existing pattern of timing messages exchanged between the master and slave devices and without the need for physical synchronization or use of separate timing messages.

Further, by taking account of the delays experienced by messages passing from the master device to the transparent clock device, a more accurate estimation of the skew of the local clock may be obtained.

Preferably the timing messages are messages under the IEEE 1588 PTP.

Preferably the processor is further arranged to syntonize the local clock to the master clock. By syntonizing (synchronizing the frequency) the local clock to the master clock, the timing information provided by the transparent clock can be made more accurate, but without the need for physical syntonization. The syntonization can be achieved by post-processing the output of a free-running local clock.

**Preferably** the processor is further arranged to compute modified residence times in the transparent clock device using the estimated skew of the local clock. By computing more accurate residence times in the transparent clock device, the accuracy of the synchronization of a clock in the slave device to the master clock can be improved as more accurate information regarding the delays in the network between the master and the salve device can be provided. Ideally, all transparent clocks between the master and the slave would compute modified residence times in this manner, but improvements will result even if only one of the transparent clocks operates in this manner.

Preferably the step of computing modified residence times uses a filtered value of the skew, for example using an exponentially weighted moving average filter.

The transparent clock device may also be arranged to determine the delays between itself and neighbouring transparent clock devices and/or the master device. This may be done by the transparent clock device exchanging timing messages with neighbouring devices over the network.

Preferably the network includes a plurality of transparent clock devices which are arranged to syntonizer their local clocks to the master clock and/or compute modified residence times.

In certain embodiments the processor is arranged to estimate the skew of the local clock using a linear approximation. For example, the estimation may be done by calculating the skew $\alpha$ as:

$$\alpha = \frac{(T_{1,n} - T_{1,n-1}) + (d_{total,n} - d_{total,n-1})}{(T_{2TC,n} - T_{2TC,n-1})} - 1$$

wherein $T_{1,n}$ is the departure time of the nth timing message sent from the master device to the slave device, $T_{2TC,n}$ is the arrival time of the nth timing message sent from the master device to the slave device at the transparent clock device and $d_{total,n}$ is the total delay experienced by the nth timing message in passing from the master device to the transparent clock device.

In certain embodiments the processor is further arranged to estimate the skew of the local clock by operating a Kalman filter. For example, the Kalman filter may be operated using the measurement equation

$$\underbrace{(T_{1,n} - T_{2TC,n}) + d_{total,n}}_{y_n} = \underbrace{\theta_n}_{D_n X_n} + v_n$$

and the state equation

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

wherein $\theta_n$ and $\alpha_n$ are the total offset and skew during the nth exchange of timing messages, $T_{1,n}$ is the departure time of the nth timing message sent from the master device to the slave device, $T_{2TC,n}$ is the arrival time of the nth timing message sent from the master device to the slave device at the transparent clock device, $d_{total,n}$ is the cumulative residence time of the nth timing message sent from the master device to the slave device in other transparent clock devices whilst travelling between the master device and the transparent clock device, $y = (T_{1,n} - T_{2TC,n}) + d_{total,n}$ is a scalar, n is a nonnegative time index, $D_n = [2\ 0]$ is a 1×2 matrix, $X_n^T = [\theta_n \quad \alpha_n]$ is a vector, $v_n$ is the measurement noise, and

$$w_n^T = \begin{bmatrix} w_{\theta,n} & w_{\alpha,n} \end{bmatrix}$$ is a process noise vector.

Embodiments using a Kalman filter such as that above can also estimate the offset of the local clock compared to the master clock.

The system of the present aspect may include any combination of some, all or none of the above described preferred and optional features.

Brief Description of the Drawings

Embodiments of the invention will now be described by way of example with reference to the accompanying drawings in which:

Figure 1 shows the message flow according to the two-step clock of IEEE 1588 PTP and has already been described;

Figure 2 shows the operation of the clock corrections in a peer-to-peer (P2P) transparent clock and has already been described;

Figure 3 shows the message flow through P2P transparent clocks and has already been described;

Figure 4 shows how P2P transparent clocks measure peer link delays and has already been described;

Figure 5 shows, schematically, the principles of clock transfer using P2P transparent clocks and has already been described;

Figure 6 shows the principles of time distribution over a network using P2P transparent clocks and has already been described;

Figure 7 shows the relationship between GrandMaster and transparent clocks with offset and skew; and

Figure 8 illustrates the timestamps at the GrandMaster and at a transparent clock on the transmission path.

Detailed Description

Clock Skew Estimation and Residence Time Measurement Correction at the Peer-to-Peer Transparent Clocks

In the present embodiments it is assumed that a free-running local oscillator is used at a TC. The frequency of this TC local oscillator is not adjusted physically, but it is allowed to free-run. This free-running oscillator drives a counter which is in turn used for timestamping at the TC and for the uncorrected measurement of the residence times of PTP messages.

*Basic Clock Model*

First a generalized clock offset and skew equation can be defined for the synchronization problem. It is assumed that at any particular time instant, the instantaneous view of the relationship between the GM/master (server) clock with timeline $S(t)$ and the TC (client) clock with timeline $C(t)$, can be described by the well-known simple skew clock model depicted in Figure 6, and described by the equation,

$$S(t) = (1+\alpha)C(t) + \theta_{in}, \qquad (3)$$

where $\theta_{in}$ is the initial time offset and $\alpha$ is the skew (frequency offset) which is a very small quantity in the order of parts-per-million. For example, oscillators used in Ethernet interfaces are required to have skew $\alpha$ of no more than $\pm 100$ ppm. This snapshot is an instantaneous view of how well the two clocks are (mis)aligned. Figure 7 illustrates the influence of $\theta_{in}$ and $\alpha$ on the alignment.

Equation (3) can further be expressed as

$$S(t) - C(t) = \theta(t) = \alpha C(t) + \theta_{in}, \qquad (4)$$

where $\theta(t) = \alpha C(t) + \theta_{in}$ is the total offset at any particular time $t > 0$. This time varying offset which reflects the true offset between the two clocks consists of two components, one being $\theta_{in}$ the (fixed) initial offset, and the other $\alpha C(t)$ which is an offset that arises as a result of the non-zero skew between the two clocks. Time synchronization in this sense will require knowing accurately the total offset $\theta(t)$ or, equivalently, its constituent components $\alpha$ and $\theta_{in}$, when given any $C(t)$ value.

### *Mechanism for Intercepting and Capturing Timestamps at the Peer-to-Peer Transparent Clock*

TCs are capable of intercepting PTP messages and capturing embedded and external TC triggered timestamps. That is, a TC is capable of snooping PTP messages passing through it. Assume there are K TCs 6 between the GM 1 and the slave 3. The following takes place at the *k*th TC, $1 \le k \le K$ :

**For Sync messages:**

1. TC 6 captures its ingress timestamp $T_{2TC}$ of the arriving Sync message sent from GM 1 to slave 3.

2. TC 6 captures embedded *correctionField* value $d_{total}$ in Sync/Follow_Up message sent from GM 1 to slave 3. This received total delay $d_{total}$ does not include the residence time of the TC under consideration.

3. TC 6 captures embedded $T_1$ timestamp in Sync or Follow_Up message sent from GM 1 to slave 3

    a. *For the one-step clock:*
    $T_1$ is in the *originTimestamp* field of Sync message and the total delay $d_{total}$ is in *correctionField* field of Sync message.
    b. *For the two-step clock:*
    $T_1$ is in the *preciseOriginTimestamp* field of Follow_Up message and the total delay $d_{total}$ is in *correctionField* field of Follow_Up message.

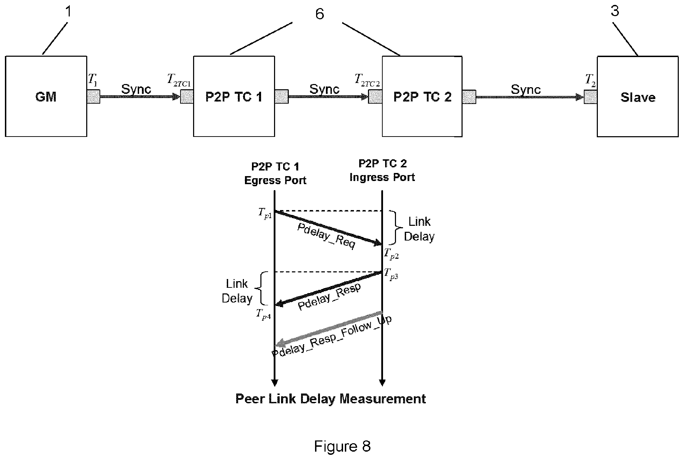

The embedded and TC triggered timestamps captured at the TC 6 (as shown in Figure 8) are used in the computation of the TC clock skew with respect to the GM 1. Techniques for estimating the skew according to embodiments of the present invention are described below.

### *Basic Network Synchronization Models*

The basic clock model above can be extended to account for the case where the GM/master clock 4 and slave clock 5 exchange PTP messages and with messages intercepted and timestamps captured at a particular TC 6 as described above. The communication link between a GM 1 and a TC 6 has with it a fixed and random delay. The PTP messages pass through a network of one or multiple P2P TCs 6 from GM 1 to slave 3.

For the nth Sync message which departs the master 1 with timestamp $T_{1,n} \in S(t)$ and arrives at the kth TC with timestamp $T_{2TC,n} \in C(t)$ after having experienced a delay of $d_{total,n}$, the simple skew clock model above can be extended to account for the travel time to obtain the following expression

$$(T_{1,n} + d_{total,n}) = (1 + \alpha)T_{2TC,n} + \theta_{in} \quad (1)$$

or

$$\theta_{in} = (T_{1,n} + d_{total,n}) - (1 + \alpha)T_{2TC,n} \quad (2)$$

A key assumption here is that the message exchanges occur over a period of time so small that the total offset $\theta$ (omitting here the time index *t* or *n*) and skew $\alpha$ can be assumed constant over that period. Two possible techniques for computing the offset $\theta$ and skew $\alpha$ using Sync (possibly and Follow_Up) message transmissions are set out in more detail below.

Even though it is possible to compute both the offset and skew, the focus of these methods is syntonizing the TC by accurately estimating the skew. So the most important parameter here is the skew $\alpha$ which will be used to modify the residence time measurements at the TC so that they will be as close as possible to the ideal values (as if accurate TC clock syntonization is achieved).

**Simple Linear Approximation Technique Skew Estimation at the P2P TCs**

For the (n-1) and nth Sync message exchange equation (5) allows the following to be derived:

$$(T_{1,n-1} + d_{total,n-1}) = (1 + \alpha)T_{2TC,n-1} + \theta_{in} \qquad (7)$$

$$(T_{1,n} + d_{total,n}) = (1 + \alpha)T_{2TC,n} + \theta_{in} \qquad (8)$$

Subtracting (7) from (8) gives

$$(T_{1,n} - T_{1,n-1}) + (d_{total,n} - d_{total,n-1}) = (1 + \alpha)(T_{2TC,n} - T_{2TC,n-1}) \qquad (9)$$

$$\alpha = \frac{(T'_{1,n} - T'_{1,n-1}) + (d_{total,n} - d_{total,n-1})}{(T'_{2TC,n} - T'_{2TC,n-1})} - 1 \qquad (10)$$

If desired, the estimated skew $\alpha$ is then used to compute the clock offset $\theta_{in}$ as given in (6). If further desired at any given discrete time n, the estimated skew $\alpha$ and offset $\theta_{in}$ can be used to estimate the server time $S_n$ corresponding to a local clock value $C_n$.

The residence times can be estimated given the computed skew $\alpha$ and the ingress and egress timestamps generated upon Sync message arrivals using the free-running TC clock as follows. Let $C_{in}$ and $C_{eg}$ denote, respectively, the ingress and egress timestamps captured by the kth TC upon a Sync message arrival at any time instance. Let $\theta_{in}$ also denote the initial time offset of the TC clock with respect to the GM clock 4. Using (3), the following relationships can be derived,

$$S_{in} = (1 + \alpha)C_{in} + \theta_{in} \qquad (11)$$

$$S_{eg} = (1 + \alpha)C_{eg} + \theta_{in} \qquad (12)$$

In the above equations, the ingress and egress timestamps are mapped to the ideal time reference, which in this case is that of the GM. The mapped timestamps are then used to compute the modified (or close to ideal) residence times at the TC as follows,

$$r_{mod} = S_{eg} - S_{in} = (1 + \alpha)(C_{eg} - C_{in}) \qquad (13)$$

Note that in the above equation the raw uncorrected or skew uncompensated residence time is given by

$$r_{raw} = (C_{eg} - C_{in}) \qquad (14)$$

However, it can be seen from (13) that when the skew $\alpha = 0$ (i.e., TC clock is perfectly syntonized to GM), then the raw residence times are the same as the ideal or modified ones, that is,

$$r_{mod} = S_{eg} - S_{in} = (C_{eg} - C_{in}) = r_{raw} \qquad (15)$$

To compute the modified residence times ($r_{mod}$), filtered values of the skew ($\hat{\alpha}$) preferably should be used. The filtering can be done using a simple exponentially weighted moving average (EWMA) filter

$$\hat{\alpha}_n = \mu\alpha_n + (1 - \mu)\hat{\alpha}_{n-1}, \ 0 < \mu < 1 \qquad (16)$$

It can be seen from the above discussion that when using a TC with a free-running clock, only knowledge of the estimated skew is important when estimating the ideal residence times. The linear approximation described here is a relatively simple estimating technique for the skew estimation. To improve the residence time estimates, a more advanced filtering scheme based on Kalman Filtering for the skew estimation is set out below.

### *Kalman Filter Based Technique for Skew Estimation at the P2P TCs*

Although, as indicated, the primary interest is in the skew, the models described below can be used with a Kalman filter based technique to estimate the clock offset and skew. The Kalman filter [1] allows the use of measurements of a process observed over time, containing noise and other inaccuracies, to produce values (estimates) that tend to be closer to the true values of the measurements and their associated calculated values. The Kalman filter produces estimates of the true values of measurements and their associated calculated values by predicting a value, estimating the uncertainty of the predicted value, and computing a weighted average of the predicted value and the measured value.

In order to use the Kalman filter to estimate the internal state of a process given only a sequence of noisy observations, the process must be modelled in accordance with the framework of the Kalman filter. Therefore consider a state-space model described by the following pair of equations

$$\text{State Equation: } X_n = A_n X_{n-1} + w_n \text{, (17)}$$

$$\text{Measurement Equation: } y_n = D_n X_n + v_n, \quad (18)$$

where *n is* a nonnegative time index, $A_n$ is a known *M-by-M* state transition matrix, $X_n$ is the M-dimensional state (or parameter) vector, $w_n$ is an M-dimensional process noise vector which is assumed to be drawn from a zero mean multivariate normal distribution with covariance $Q_n = E[w_n w_n^T]$, $w_n \sim N(0, Q_n)$, $y_n$ is the measurement, $D_n$ is a known $1 \times M$-dimensional measurement matrix which maps the true state space into the measurement space, $v_n$ is the measurement noise which is assumed to be zero mean Gaussian white noise with covariance $R_n = E[v_n v_n^T]$, $v_n \sim N(0, R_n)$, and T denotes transpose. It is assumed in the model that the initial state, and the noise vectors at each step $\{X_0, w_1, ..., w_n, v_1, ..., v_n\}$ are mutually independent.

The notation $\hat{X}_{n,m}$ used below represents the estimate of $X$ at time n given observations up to, and including at time m. The Kalman filter equations is most often conceptualized as two distinct phases: Predict and Update as described below.

### <u>Predict Phase:</u>

The predict phase uses the state estimate from the previous time step to produce an estimate of the state at the current time step.

• Predicted *(a priori)* state estimate:

$$\hat{X}_{n,n-1} = A_n \hat{X}_{n-1,n-1} \quad (19)$$

This predicted state estimate is also known as the *a priori* state estimate because, although it is an estimate of the state at the current time step, it does not include observation information from the current time step.

• Predicted *(a priori)* estimate covariance:

$$P_{n,n-1} = A_n P_{n-1,n-1} A_n^T + Q_n \quad (20)$$

### <u>Update Phase:</u>

In the update phase, the current a priori prediction is combined with current observation information to refine the state estimate. This improved estimate is termed the a posteriori state estimate.

- Innovation or measurement residual:

$$\widetilde{z}_n = y_n - D_n \hat{X}_{n,n-1} \quad (21)$$

- Innovation (or residual) covariance:

$$S_n = D_n P_{n,n-1} D_n^T + R_n \quad (22)$$

- Optimal Kalman gain:

$$K_n = P_{n,n-1} D_n^T S_n^{-1} = P_{n,n-1} D_n^T [D_n P_{n,n-1} D_n^T + R_n]^{-1} \quad (23)$$

- Updated *(a posteriori)* state estimate:

$$\hat{X}_{n,n} = \hat{X}_{n,n-1} + K_n \widetilde{z}_n = \hat{X}_{n,n-1} + K_n (y_n - D_n \hat{X}_{n,n-1}) \quad (24)$$

This is the *a posteriori* state estimate at time n given observations up to and including at time n. The second term in the above equation is called the correction term and it represents the amount by which to correct the propagated state estimate due to our measurement. Inspection of the Kalman gain equation shows that if the measurement noise is large, $R_n$ will be large, so that $K_n$ will be small and we would not give much credibility to the measurement $y$ when computing the next $X$. On the other hand, if the measurement noise is small, $R_n$ will be small, so that $K_n$ will be large and we will give a lot of credibility to the measurement when computing the next $\hat{X}$.

- Updated *(a posteriori)* estimate covariance:

$$P_{n,n} = (I - K_n D_n) P_{n,n-1} \quad (25)$$

This is the *a posteriori* error covariance matrix (a measure of the estimated accuracy of the state estimate).

Typically, the two phases alternate, with the prediction advancing the state until the next scheduled observation, and the update incorporating the observation. Practical implementation of the Kalman Filter requires getting a good estimate of the noise covariance matrices $Q_n$ and $R_n$. The estimation of these noise covariance is discussed in a separate document.

*Development of the Measurement Equation*

Assume a Sync message travels from a master 1 to the kth TC 6 experiences a total delay $d_{total,n}$ plus a stochastic delay $v_n$ (to account for all other delay components in the system). The variables $\theta_n$ and $\alpha_n$ are the total offset and skew during the nth Sync message exchange. Equation (5) above can be rewritten to account for the above conditions with the following equations

$$(T_{1,n} + d_{total,n} + v_n) = (1 + \alpha_n) T_{2TC,n} + \theta_{in} \quad (26)$$

**It can be seen** from (4) that $\theta_n = \alpha_n T_{2TC,n} + \theta_{in}$ and which means equation (26) can be expressed as

$$(T_{1,n} + d_{total,n} + v_n) = T_{2TC,n} + \theta_n \quad (27)$$

The measurement equation is thus obtained as

$$\underbrace{(T_{1,n} - T_{2TC,n}) + d_{total,n}}_{y_n} = \underbrace{\theta_n}_{D_n X_n} + v_n \quad (28)$$

where

n is a nonnegative time index,
$y_n = (T_{1,n} - T_{2TC,n}) + d_{total,n}$ is a scalar,
$D_n = [1\ 0]$ is a $1{\times}2$ matrix,

$$X_n^T = [\theta_n \quad \alpha_n]$$ is a vector, and

$v_n$ is the measurement noise.

*Development of the State (Process) Equation*

Here the TC clock (process) model parameters $A_n$ and $w_n$ are derived. The clock skew over two time points $T_{2,n}$ and $T_{2,n-1}$ can be estimated given two clock offsets $\theta_n$ and $\theta_{n-1}$ as

$$\alpha_{n-1} = \frac{\theta_n - \theta_{n-1}}{T'_{2,n} - T'_{2,n-1}}. \quad (29)$$

The process dynamics for the clock while accounting for process noise can then be expressed as

$$\theta_n = \theta_{n-1} + \alpha_{n-1}(T'_{2,n} - T'_{2,n-1}) + w_{\theta,n}$$
$$\alpha_n = \alpha_{n-1} + w_{\alpha,n} \quad (30)$$

**where** $w_n^T = [w_{\theta,n} \quad w_{\alpha,n}]$ is the process noise vector which is assumed to be drawn from a zero mean normal distribution with covariance $Q_n = E[w_n w_n^T]$. The system can be described by the following two-state dynamic model

$$X_n = \begin{bmatrix} \theta_n \\ \alpha_n \end{bmatrix} = \begin{bmatrix} 1 & (T'_{2,n} - T'_{2,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n, \quad (31)$$

**where** $A_n$ is the known 2-by-2 state transition matrix. If the time between Sync messages is fixed as would be the case when a constant Sync departure rate is configured at the GM ($(T_{1,n} - T_{1,n-1}) = \Delta t$), then, $\Delta T_n = (T_{2,n} - T_{2,n-1}) = \Delta t$ is a constant term, and

$$A_n = A = \begin{bmatrix} 1 & (T'_{1,n} - T'_{1,n-1}) \\ 0 & 1 \end{bmatrix} = \begin{bmatrix} 1 & \Delta t \\ 0 & 1 \end{bmatrix}. \quad (32)$$

In reality, $A_n$ is not a fixed matrix because of the variable message delays experienced in the system, thus making (31) the most appropriate expression to be used at each iteration. The clock skew ($\alpha$) estimated at the TC using any of the two techniques described above can be used to compute the modified residence times as given by (13). To achieve time synchronization or equivalently find the server time estimate $S_n$ (although not required in this problem context), the estimate $\theta_n$ from the Kalman Filter can be used in (4) to obtain $S_n$, **that is,** $S_n = C_n + \theta_n$.

The systems and methods of the above embodiments may be implemented in a computer system (in particular in computer hardware or in computer software) in addition to the structural components and user interactions described.

The term "computer system" includes the hardware, software and data storage devices for embodying a system or carrying out a method according to the above described embodiments. For example, a computer system may comprise a central processing unit (CPU), input means, output means and data storage. Preferably the computer system has a monitor to provide a visual output display. The data storage may comprise RAM, disk drives or other computer readable media. The computer system may include a plurality of computing devices connected by a network and able to communicate with each other over that network.

The methods of the above embodiments may be provided as computer programs or as computer program products or computer readable media carrying a computer program which is arranged, when run on a computer, to perform the method(s) described above.

The term "computer readable media" includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made according to the scope of the appended claims. $d_{total,n}$,

In particular, although the methods of the above embodiments have been described as being implemented on the systems of the embodiments described, the methods and systems of the present invention need not be implemented in conjunction with each other, but can be implemented on alternative systems or using alternative methods respectively, according to the scope of the appended claims. $d_{total,n}$,

## References

[1]. R. E. Kalman, "A New Approach to Linear Filtering and Prediction Problems," Transaction of the ASME-Journal of Basic Engineering, March 1960, pp. 35-45.

All references referred to above are hereby incorporated by reference.

## Claims

1. A method of estimating the skew of a local clock of a peer-to-peer transparent clock device (6) connected through a network (2) with $d_{total,n}$, a master device (1) having a master clock (4) and a slave device (3), the method including the steps of:

   sending timing messages from the master device (1) to the slave device (3) over the network (2), the timing messages passing through said transparent clock device (6);
   recording times of sending of said timing messages by the master device (1);
   extracting, by the transparent clock device (6), from timing messages sent from the master device (1) to the slave device (3), the times of sending of said timing messages;
   recording the times of receipt by the transparent clock device (6) of timing messages sent from the master device (1) to the slave device (3);
   extracting, by the transparent clock device (6), from the timing messages, the total delay experienced by each timing message in passing from the master device (1) to the transparent clock device, including the residence time in other transparent clock devices between the master device and the transparent clock device;
   by the transparent clock device (6), measuring a message residence time for a timing message passing through the transparent clock device, modifying a correction field in the received timing message with at least the measured message residence time to generate a modified correction field in the timing message sent from the transparent clock device to the slave device (3); and
   estimating, by the transparent clock device (6), the skew of the local clock in the transparent clock device compared to the master clock (4) using a plurality of each of said extracted and recorded times.

2. A method according to claim 1, further including the step of syntonizing the local clock of the transparent clock device (6) to the master clock (4) and syntonizing a second slave clock (5) in the slave device (3) to the master clock.

3. A method according to claim 1 or claim 2, further including the step of computing modified residence times by the transparent clock device (6) using the estimated skew of the local clock.

4. A method according to any one of the preceding claims wherein the step of estimating the skew of the local clock includes:
   calculating the skew $\alpha$ as:

$$\alpha = \frac{(T_{1,n} - T_{1,n-1}) + (d_{total,n} - d_{total,n-1})}{(T_{2TC,n} - T_{2TC,n-1})} - 1$$

wherein $T_{1,n}$ is the departure time of the nth timing message sent from the master device (1) to the slave device (3), $T_{2TC,n}$ is the arrival time of the nth timing message sent from the master device to the slave device at the transparent clock device (6) and $d_{total,n}$ is the total delay experienced by the nth timing message in passing from the master device to the transparent clock device.

5.  A method according to any one of claims 1 to 3 wherein the step of estimating the skew of the local clock includes operating a Kalman filter using the measurement equation

$$\underbrace{(T_{1,n} - T_{2TC,n}) + d_{total,n}}_{y_n} = \underbrace{\theta_n}_{D_n X_n} + v_n$$

and the state equation

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

wherein $\theta_n$ and $\alpha_n$ are the total offset and skew during the nth exchange of timing messages, $T_{1,n}$ is the departure time of the nth timing message sent from the master device (1) to the slave device (3), $T_{2TC,n}$ is the arrival time of the nth timing message sent from the master device to the slave device at the transparent clock device (6), $d_{total,n}$ is the total delay including the cumulative residence time of the nth timing message sent from the master device to the slave device in other transparent clock devices whilst travelling between the master device and the transparent clock device, $y = (T_{1,n} - T_{2TC,n}) + d_{total,n}$ is a scalar, n is a nonnegative time index, $D_n = [2\ 0]$ is a 1×2 matrix, $X_n^T = [\theta_n \quad \alpha_n]$ is a vector, $v_n$ is the measurement noise, and $w_n^T = [w_{\theta,n} \quad w_{\alpha,n}]$ is a process noise vector.

6.  A peer-to-peer transparent clock device (6) for use in a network (2) between a master device (1) having a master clock (4) and a slave device (3), the transparent clock device having:

    a local clock; and
    a processor,
    wherein the transparent clock device (6) is arranged to:

        receive and re-transmit timing messages sent from the master device (1) to the slave device (3) over the network (2),
        and the processor is arranged to:

            extract, from timing messages sent from the master device (1) to the slave device (3), the times of sending of said timing messages;
            record the times of receipt by the transparent clock device (6) of timing messages sent from the master device (1) to the slave device (3);
            extract, from the timing messages, the total delay experienced by each timing message in passing from the master device (1) to the transparent clock device (6), including the residence time in other transparent clock devices between the master device and the transparent clock device;
            measure a message residence time for a timing message passing through the transparent clock device (6), modify a correction field in the received timing message with at least the measured message residence time to generate a modified correction field in the timing message sent from the transparent clock device to the slave device (3); and
            estimate the skew of the local clock in the transparent clock device (6) compared to the master clock (4) using a plurality of each of said extracted and recorded times.

7. A transparent clock device (6) according to claim 6 wherein the processor is further arranged to syntonize the local clock in the transparent clock device to the master clock (4).

8. A transparent clock device (6) according to claim 6 or claim 7 wherein the processor is further arranged to compute modified residence times in the transparent clock device using the estimated skew of the local clock.

9. A transparent clock device (6) according to any one of claims 6 to 8 wherein the processor is arranged to estimate the skew of the local clock by:
   calculating the skew $\alpha$ as:

$$\alpha = \frac{(T_{1,n} - T_{1,n-1}) + (d_{total,n} - d_{total,n-1})}{(T_{2TC,n} - T_{2TC,n-1})} - 1$$

wherein $T_{1,n}$ is the departure time of the nth timing message sent from the master device (1) to the slave device (3), $T_{2TC,n}$ is the arrival time of the nth timing message sent from the master device to the slave device at the transparent clock device (6) and $d_{total,n}$ is the total delay experienced by the nth timing message in passing from the master device to the transparent clock device.

10. A transparent clock device (6) according to any one of claims 6 to 8 wherein the processor is arranged to estimate the skew of the local clock by operating a Kalman filter using the measurement equation

$$\underbrace{(T_{1,n} - T_{2TC,n}) + d_{total,n}}_{y_n} = \underbrace{\theta_n}_{D_n X_n} + v_n$$

and the state equation

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

wherein $\theta_n$ and $\alpha_n$ are the total offset and skew during the nth exchange of timing messages, $T_{1,n}$ is the departure time of the nth timing message sent from the master device (1) to the slave device (3), $T_{2TC,n}$ is the arrival time of the nth timing message sent from the master device to the slave device at the transparent clock device (6), $d_{total,n}$ is the total delay including the cumulative residence time of the nth timing message sent from the master device to the slave device in other transparent clock devices whilst travelling between the master device and the transparent clock device, $y = (T_{1,n} - T_{2TC,n}) + d_{total,n}$ is a scalar, n is a nonnegative time index, $D_n = [2\ 0]$ is a 1×2 matrix, $X_n^T = [\theta_n \quad \alpha_n]$ is a vector, $v_n$ is the measurement noise, and $w_n^T = [w_{\theta,n} \quad w_{\alpha,n}]$ is a process noise vector.

11. A networked time system including a master device (1) having a master clock (4) and a slave device (3), a network (2) connecting the master device to the slave device and a peer-to-peer transparent clock device (6) located in the network between the master device and the slave device and having a local clock, wherein:

   the master device (1) is arranged to send timing messages over the network (2), the timing messages passing through said transparent clock device (6);
   the master device (1) is arranged to record times of sending of said timing messages at the master device;
   the transparent clock device (6) includes a local clock and a processor, and the processor is arranged to:

   extract, from timing messages sent from the master device (1) to the slave device (3), the times of sending of said timing messages;
   record the times of receipt by the transparent clock device (6) of timing messages sent from the master device (1) to the slave device (3);
   extract, from the timing messages, the total delay experienced by each timing message in passing from the master device (1) to the transparent clock device (6), including the residence time in other transparent clock devices between the master device and the transparent clock device;

measure a message residence time for a timing message passing through the transparent clock device (6), modify a correction field in the received timing message with at least the measured message residence time to generate a modified correction field in the timing message sent from the transparent clock device to the slave device (3); and

estimate the skew of the local clock in the transparent clock device (6) compared to the master clock (4) using a plurality of each of said extracted and recorded times.

**12.** A networked time system according to claim 11, wherein the processor is further arranged to syntonize the local clock in the transparent clock device (6) to the master clock (4).

**13.** A networked time system according to claim 11 or claim 12, wherein the processor is further arranged to compute modified residence times in the transparent clock device (6) using the estimated skew of the local clock.

**14.** A networked time system according to any one of claims 11 to 13 wherein the processor is arranged to estimate the skew of the local clock by:
calculating the skew $\alpha$ as:

$$\alpha = \frac{(T_{1,n} - T_{1,n-1}) + (d_{total,n} - d_{total,n-1})}{(T_{2TC,n} - T_{2TC,n-1})} - 1$$

wherein $T_{1,n}$ is the departure time of the nth timing message sent from the master device (1) to the slave device (3), $T_{2TC,n}$ is the arrival time of the nth timing message sent from the master device to the slave device at the transparent clock device (6) and $d_{total,n}$ is the total delay experienced by the nth timing message in passing from the master device to the transparent clock device.

**15.** A networked time system according to any one of claims 11 to 13 wherein the processor is further arranged to estimate the skew of the local clock by operating a Kalman filter using the measurement equation

$$\underbrace{(T_{1,n} - T_{2TC,n}) + d_{total,n}}_{y_n} = \underbrace{\theta_n}_{D_n X_n} + v_n$$

and the state equation

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

wherein $\theta_n$ and $\alpha_n$ are the total offset and skew during the nth exchange of timing messages, $T_{1,n}$ is the departure time of the nth timing message sent from the master device (1) to the slave device (3), $T_{2TC,n}$ is the arrival time of the nth timing message sent from the master device to the slave device at the transparent clock device (6), $d_{total,n}$ is the total delay including the cumulative residence time of the nth timing message sent from the master device to the slave device in other transparent clock devices whilst travelling between the master device and the transparent clock device, $y = (T_{1,n} - T_{2TC,n}) + d_{total,n}$ is a scalar, n is a nonnegative time index, $D_n = [2\ 0]$ is a $1\times2$ matrix, $X_n^T = [\theta_n \quad \alpha_n]$ is a vector, $v_n$ is the measurement noise, and $w_n^T = [w_{\theta,n} \quad w_{\alpha,n}]$ is a process noise vector.

**Patentansprüche**

**1.** Verfahren zum Schätzen des Versatzes eines lokalen Taktes einer transparenten Peer-to-Peer-Taktvorrichtung (6), die über ein Netzwerk (2) mit einer Master-Vorrichtung (1) mit einem Master-Takt (4) und einer Slave-Vorrichtung (3) verbunden ist, wobei das Verfahren die Schritte beinhaltet:

Senden von Zeitmessungsnachrichten von der Master-Vorrichtung (1) an die Slave-Vorrichtung (3) über das Netzwerk (2), wobei die Zeitmessungsnachrichten durch die transparente Taktvorrichtung (6) passieren;

Aufzeichnen der Sendezeiten der Zeitmessungsnachrichten durch die Master-Vorrichtung (1);

Extrahieren der Sendezeiten der Zeitmessungsnachrichten aus den von der Master-Vorrichtung (1) an die Slave-Vorrichtung (3) gesendeten Zeitmessungsnachrichten durch die transparente Taktvorrichtung (6);

Aufzeichnen der Empfangszeiten der von der Master-Vorrichtung (1) an die Slave-Vorrichtung (3) gesendeten Zeitmessungsnachrichten durch die transparente Taktvorrichtung (6);

Extrahieren durch die transparente Taktvorrichtung (6) aus den Zeitnachrichten der Gesamtverzögerung, die jede Zeitmessungsnachricht beim Passieren von der Master-Vorrichtung (1) zu der transparenten Taktvorrichtung erfährt, einschließlich der Verweilzeit in anderen transparenten Taktvorrichtungen zwischen der Master-Vorrichtung und der transparenten Taktvorrichtung;

durch die transparente Takteinrichtung (6), Messen einer Nachrichtenverweilzeit für eine Zeitmessungsnachricht, die die transparente Taktvorrichtung passiert, Modifizieren eines Korrekturfeldes in der empfangenen Zeitmessungsnachricht mit wenigstens der gemessenen Nachrichtenverweilzeit, um ein modifiziertes Korrekturfeld in der Zeitmessungsnachricht zu erzeugen, die von der transparenten Taktvorrichtung an die Slave-Vorrichtung (3) gesendet wird; und

Schätzen durch die transparente Taktvorrichtung (6) des Versatzes des lokalen Takts in der transparenten Taktvorrichtung im Vergleich zu dem Master-Takt (4) unter Verwendung einer Mehrzahl von jeder der extrahierten und aufgezeichneten Zeiten.

2. Verfahren nach Anspruch 1, das ferner den Schritt des Synchronisierens des lokalen Takts der transparenten Taktvorrichtung (6) mit dem Master-Takt (4) und des Synchronisierens eines zweiten Slave-Takts (5) in der Slave-Vorrichtung (3) mit dem Master-Takt beinhaltet.

3. Verfahren nach Anspruch 1 oder 2, das ferner den Schritt des Berechnens modifizierter Verweilzeiten durch die transparente Taktvorrichtung (6) unter Verwendung des geschätzten Versatzes des lokalen Takts beinhaltet.

4. Verfahren nach einem der vorhergehenden Ansprüche, wobei der Schritt des Schätzens des Versatzes des lokalen Takts beinhaltet:

Berechnen des Versatzes $\alpha$ als:

$$\alpha = \frac{(T_{1,n} - T_{1,n-1}) + (d_{total,n} - d_{total,n-1})}{(T_{2TC,n} - T_{2TC,n-1})} - 1$$

wobei $T_{1,n}$ die Abfahrtszeit der n-ten Zeitmessungsnachricht ist, die von der Master-Vorrichtung (1) an die Slave-Vorrichtung (3) gesendet wird, $T_{2TC,n}$ die Ankunftszeit der n-ten Zeitmessungsnachricht ist, die von der Master-Vorrichtung an die Slave-Vorrichtung an der transparenten Taktvorrichtung (6) gesendet wird, und $d_{total,n}$ die Gesamtverzögerung ist, die die n-te Zeitmessungsnachricht beim Passieren von der Master-Vorrichtung zu der transparenten Taktvorrichtung erfährt.

5. Verfahren nach einem der Ansprüche 1 bis 3, wobei der Schritt des Schätzens des Versatzes des lokalen Takts das Betreiben eines Kalman-Filters unter Verwendung der Messgleichung

$$\underbrace{(T_{1,n} - T_{2TC,n}) + d_{total,n}}_{y_n} = \underbrace{\theta_n}_{D_n X_n} + v_n$$

und der Zustandsgleichung

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

umfasst, wobei $\theta_n$ und $\alpha_n$ der Gesamt-Offset und der Versatz während des n-ten Austauschs von Zeitmessungsnachrichten sind, $T_{1,n}$ die Abfahrtszeit der n-ten Zeitmessungsnachricht ist, die von der Master-Vorrichtung (1) an die Slave-Vorrichtung (3) gesendet wird, $T_{2TC,n}$ die Ankunftszeit der n-ten Zeitmessungsnachricht ist, die von der Master-Vorrichtung an die Slave-Vorrichtung an der transparenten Taktvorrichtung (6) gesendet wird, $d_{total,n}$ die Gesamtverzögerung einschließlich der kumulativen Verweilzeit der n-ten Zeitmessungsnachricht ist, die von der Master-Vorrichtung an die Slave-Vorrichtung in anderen transparenten Taktvorrichtungen gesendet wird, während sie sich zwischen der Master-Vorrichtung und der transparenten Taktvorrichtung bewegt, $y = (T_{1,n} - T_{2TC,n}) + d_{total,n}$ ein Skalar ist, n ein nichtnegativer Zeitindex ist, $D_n = [2\ 0]$ eine 1×2-Matrix ist, $X_n^T = \begin{bmatrix} \theta_n & \alpha_n \end{bmatrix}$ ein Vektor ist, $v_n$ das

Messrauschen ist und $w_n^T = \begin{bmatrix} w_{\theta,n} & w_{\alpha,n} \end{bmatrix}$ ein Prozessrauschvektor ist.

6. Transparente Peer-to-Peer-Taktvorrichtung (6) für die Verwendung in einem Netzwerk (2) zwischen einer Master-Vorrichtung (1) mit einem Master-Takt (4) und einer Slave-Vorrichtung (3), wobei die transparente Taktvorrichtung aufweist:

einen lokalen Takt; und
einen Prozessor,
wobei die transparente Taktvorrichtung (6) angeordnet ist, zum:

Empfangen und erneuten Senden der von der Master-Vorrichtung (1) über das Netzwerk (2) an die Slave-Vorrichtung (3) gesendeten Zeitmessungsnachrichten,
und der Prozessor angeordnet ist, zum:

Extrahieren der Sendezeiten der Zeitmessungsnachrichten aus den von der Master-Vorrichtung (1) an die Slave-Vorrichtung (3) gesendeten Zeitmessungsnachrichten;
Aufzeichnen der Empfangszeiten der von der Master-Vorrichtung (1) an die Slave-Vorrichtung (3) gesendeten Zeitmessungsnachrichten durch die transparente Taktvorrichtung (6);
Extrahieren aus den Zeitnachrichten der Gesamtverzögerung, die jede Zeitmessungsnachricht beim Passieren von der Master-Vorrichtung (1) zu der transparenten Taktvorrichtung (6) erfährt, einschließlich der Verweilzeit in anderen transparenten Taktvorrichtungen zwischen der Master-Vorrichtung und der transparenten Taktvorrichtung;
Messen einer Nachrichtenverweilzeit für eine Zeitmessungsnachricht, die die transparente Taktvorrichtung (6) passiert, Modifizieren eines Korrekturfeldes in der empfangenen Zeitmessungsnachricht mit wenigstens der gemessenen Nachrichtenverweilzeit, um ein modifiziertes Korrekturfeld in der Zeitmessungsnachricht zu erzeugen, die von der transparenten Taktvorrichtung an die Slave-Vorrichtung (3) gesendet wird; und
Schätzen des Versatzes des lokalen Takts in der transparenten Taktvorrichtung (6) im Vergleich zu dem Master-Takt (4) unter Verwendung einer Mehrzahl von jeder der extrahierten und aufgezeichneten Zeiten.

7. Transparente Taktvorrichtung (6) nach Anspruch 6, wobei der Prozessor ferner angeordnet ist, um den lokalen Takt in der transparenten Taktvorrichtung mit dem Master-Takt (4) zu synchronisieren.

8. Transparente Taktvorrichtung (6) nach Anspruch 6 oder 7, wobei der Prozessor ferner angeordnet ist, um modifizierte Verweilzeiten in der transparenten Taktvorrichtung unter Verwendung des geschätzten Versatzes des lokalen Takts zu berechnen.

9. Transparente Taktvorrichtung (6) nach einem der Ansprüche 6 bis 8, wobei der Prozessor angeordnet ist, um den Versatz des lokalen Taktes zu schätzen durch:
Berechnen des Versatzes $\alpha$ als:

$$\alpha = \frac{(T_{1,n} - T_{1,n-1}) + (d_{total,n} - d_{total,n-1})}{(T_{2TC,n} - T_{2TC,n-1})} - 1$$

wobei $T_{1,n}$ die Abfahrtszeit der n-ten Zeitmessungsnachricht ist, die von der Master-Vorrichtung (1) an die Slave-Vorrichtung (3) gesendet wird, $T_{2TC,n}$ die Ankunftszeit der n-ten Zeitmessungsnachricht ist, die von der Master-Vorrichtung an die Slave-Vorrichtung an der transparenten Taktvorrichtung (6) gesendet wird, und $d_{total,n}$ die Gesamtverzögerung ist, die die n-te Zeitmessungsnachricht beim Passieren von der Master-Vorrichtung zu der transparenten Taktvorrichtung erfährt.

10. Transparente Taktvorrichtung (6) nach einem der Ansprüche 6 bis 8, wobei der Prozessor angeordnet ist, um den Versatz des lokalen Taktes durch Anwenden eines Kalman-Filters unter Verwendung der Messgleichung

$$\underbrace{(T_{1,n} - T_{2TC,n}) + d_{total,n}}_{y_n} = \underbrace{\theta_n}_{D_n X_n} + v_n$$

und der Zustandsgleichung

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

zu schätzen, wobei $\theta_n$ und $\alpha_n$ der Gesamt-Offset und der Versatz während des n-ten Austauschs von Zeitmessungsnachrichten sind, $T_{1,n}$ die Abfahrtszeit der n-ten Zeitmessungsnachricht ist, die von der Master-Vorrichtung (1) an die Slave-Vorrichtung (3) gesendet wird, $T_{2TC,n}$ die Ankunftszeit der n-ten Zeitmessungsnachricht ist, die von der Master-Vorrichtung an die Slave-Vorrichtung an der transparenten Taktvorrichtung (6) gesendet wird, $d_{total,n}$ die Gesamtverzögerung einschließlich der kumulativen Verweilzeit der n-ten Zeitmessungsnachricht ist, die von der Master-Vorrichtung an die Slave-Vorrichtung in anderen transparenten Taktvorrichtungen gesendet wird, während sie sich zwischen der Master-Vorrichtung und der transparenten Taktvorrichtung bewegt, $y = (T_{1,n} - T_{2TC,n}) + d_{total,n}$ ein Skalar ist, n ein nichtnegativer Zeitindex ist, $D_n$ = [2 0] eine 1 ×2-Matrix ist, $X_n^T = \begin{bmatrix} \theta_n & \alpha_n \end{bmatrix}$ Vektor ist, $v_n$ das

Messrauschen ist und $w_n^T = \begin{bmatrix} w_{\theta,n} & w_{\alpha,n} \end{bmatrix}$ ein Prozessrauschvektor ist.

11. Vernetztes Zeitsystem, das eine Master-Vorrichtung (1) mit einem Master-Takt (4) und eine Slave-Vorrichtung (3), ein Netzwerk (2), das die Master-Vorrichtung mit der Slave-Vorrichtung verbindet, und eine transparente Peer-to-Peer-Taktvorrichtung (6) beinhaltet, die sich in dem Netzwerk zwischen der Master-Vorrichtung und der Slave-Vorrichtung befindet und einen lokalen Takt aufweist, wobei:

die Master-Vorrichtung (1) angeordnet ist, um Zeitmessungsnachrichten über das Netzwerk (2) zu senden, wobei die Zeitmessungsnachrichten durch die transparente Taktvorrichtung (6) passieren;
die Haupt-Vorrichtung (1) angeordnet ist, um die Sendezeiten der Zeitmessungsnachrichten an der Haupt-Vorrichtung aufzuzeichnen;
die transparente Taktvorrichtung (6) einen lokalen Takt und einen Prozessor beinhaltet, und der Prozessor angeordnet ist, zum:

Extrahieren der Sendezeiten der Zeitmessungsnachrichten aus den von der Master-Vorrichtung (1) an die Slave-Vorrichtung (3) gesendeten Zeitmessungsnachrichten;
Aufzeichnen der Empfangszeiten der von der Master-Vorrichtung (1) an die Slave-Vorrichtung (3) gesendeten Zeitmessungsnachrichten durch die transparente Taktvorrichtung (6);
Extrahieren aus den Zeitnachrichten der Gesamtverzögerung, die jede Zeitmessungsnachricht beim Passieren von der Master-Vorrichtung (1) zu der transparenten Taktvorrichtung (6) erfährt, einschließlich der Verweilzeit in anderen transparenten Taktvorrichtungen zwischen der Master-Vorrichtung und der transparenten Taktvorrichtung;
Messen einer Nachrichtenverweilzeit für eine Zeitmessungsnachricht, die die transparente Taktvorrichtung (6) passiert, Modifizieren eines Korrekturfeldes in der empfangenen Zeitmessungsnachricht mit wenigstens der gemessenen Nachrichtenverweilzeit, um ein modifiziertes Korrekturfeld in der Zeitmessungsnachricht zu erzeugen, die von der transparenten Taktvorrichtung an die Slave-Vorrichtung (3) gesendet wird; und
Schätzen des Versatzes des lokalen Takts in der transparenten Taktvorrichtung (6) im Vergleich zu dem Master-Takt (4) unter Verwendung einer Mehrzahl von jeder der extrahierten und aufgezeichneten Zeiten.

12. Vernetztes Zeitsystem nach Anspruch 11, wobei der Prozessor ferner angeordnet ist, um den lokalen Takt in der transparenten Taktvorrichtung (6) mit dem Master-Takt (4) zu synchronisieren.

13. Vernetztes Zeitsystem nach Anspruch 11 oder 12, wobei der Prozessor ferner angeordnet ist, um modifizierte Verweilzeiten in der transparenten Taktvorrichtung (6) unter Verwendung des geschätzten Versatzes des lokalen Takts zu berechnen.

14. Vernetztes Zeitsystem nach einem der Ansprüche 11 bis 13, wobei der Prozessor angeordnet ist, um den Versatz des lokalen Takts zu schätzen, durch: Berechnen des Versatzes $\alpha$ als:

$$\alpha = \frac{(T_{1,n} - T_{1,n-1}) + (d_{total,n} - d_{total,n-1})}{(T_{2TC,n} - T_{2TC,n-1})} - 1$$

wobei $T_{1,n}$ die Abfahrtszeit der n-ten Zeitmessungsnachricht ist, die von der Master-Vorrichtung (1) an die Slave-Vorrichtung (3) gesendet wird, $T_{2TC,n}$ die Ankunftszeit der n-ten Zeitmessungsnachricht ist, die von der Master-Vorrichtung an die Slave-Vorrichtung an der transparenten Taktvorrichtung (6) gesendet wird, und $d_{total,n}$ die Gesamtverzögerung ist, die die n-te Zeitmessungsnachricht beim Passieren von der Master-Vorrichtung zu der transparenten Taktvorrichtung erfährt.

15. Vernetztes Zeitsystem nach einem der Ansprüche 11 bis 13, wobei der Prozessor ferner angeordnet ist, um den Versatz des lokalen Takts durch Anwendung eines Kalman-Filters unter Verwendung der Messgleichung

$$\underbrace{(T_{1,n} - T_{2TC,n}) + d_{total,n}}_{y_n} = \underbrace{\theta_n}_{D_n X_n} + v_n$$

und der Zustandsgleichung

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

zu schätzen, wobei $\theta_n$ und $\alpha_n$ der Gesamt-Offset und der Versatz während des n-ten Austauschs von Zeitmessungsnachrichten sind, $T_{1,n}$ die Abfahrtszeit der n-ten Zeitmessungsnachricht ist, die von der Master-Vorrichtung (1) an die Slave-Vorrichtung (3) gesendet wird, $T_{2TC,n}$ die Ankunftszeit der n-ten Zeitmessungsnachricht ist, die von der Master-Vorrichtung an die Slave-Vorrichtung an der transparenten Taktvorrichtung (6) gesendet wird, $d_{total,n}$ die Gesamtverzögerung einschließlich der kumulativen Verweilzeit der n-ten Zeitmessungsnachricht ist, die von der Master-Vorrichtung an die Slave-Vorrichtung in anderen transparenten Taktvorrichtungen gesendet wird, während sie sich zwischen der Master-Vorrichtung und der transparenten Taktvorrichtung bewegt, $y = (T_{1,n} - T_{2TC,n} + d_{total,n}$ ein Skalar ist, n ein nichtnegativer Zeitindex ist, $D_n = [2\ 0]$ eine 1 ×2-Matrix ist, $X_n^T = \begin{bmatrix} \theta_n & \alpha_n \end{bmatrix}$ ein Vektor ist, $v_n$ das

Messrauschen ist und $w_n^T = \begin{bmatrix} w_{\theta,n} & w_{\alpha,n} \end{bmatrix}$ ein Prozessrauschvektor ist.

## Revendications

1. Procédé d'estimation du biais d'une horloge locale d'un dispositif à horloge transparente pair-à-pair (6) connecté, par l'intermédiaire d'un réseau (2), à un dispositif maître (1), ayant une horloge maîtresse (4), et à un dispositif esclave (3), le procédé incluant les étapes de :

l'envoi de messages de synchronisation depuis le dispositif maître (1) au dispositif esclave (3) par l'intermédiaire du réseau (2), les messages de synchronisation passant à travers ledit dispositif à horloge transparente (6) ; l'enregistrement de temps de l'envoi desdits messages de synchronisation par le dispositif maître (1) ; l'extraction, par le dispositif à horloge transparente (6), à partir de messages de synchronisation envoyés depuis le dispositif maître (1) au dispositif esclave (3), des temps de l'envoi desdits messages de synchronisation ;

l'enregistrement des temps de réception, par le dispositif à horloge transparente (6), de messages de synchronisation envoyés depuis le dispositif maître (1) au dispositif esclave (3) ;

l'extraction, par le dispositif à horloge transparente (6), à partir des messages de synchronisation, du retard total subi par chaque message de synchronisation dans le passage depuis le dispositif maître (1) au dispositif à horloge transparente, y compris le temps de séjour dans d'autres dispositifs à horloge transparente entre le dispositif maître et le dispositif à horloge transparente ;

par le dispositif à horloge transparente (6), la mesure d'un temps de séjour de message pour un message de synchronisation passant à travers le dispositif à horloge transparente, la modification d'un champ de correction dans le message de synchronisation reçu avec au moins le temps de séjour de message mesuré pour générer un champ de correction modifié dans le message de synchronisation envoyé depuis le dispositif à horloge transparente au dispositif esclave (3) ; et

l'estimation, par le dispositif à horloge transparente (6), du biais de l'horloge locale dans le dispositif à horloge transparente en comparaison avec l'horloge maîtresse (4) en utilisant une pluralité de chacun desdits temps extraits et enregistrés.

2. Procédé selon la revendication 1, incluant en outre l'étape du réglage de l'horloge locale du dispositif à horloge transparente (6) à l'horloge maîtresse (4) et du réglage d'une seconde horloge esclave (5), dans le dispositif esclave (3), à l'horloge maîtresse.

3. Procédé selon la revendication 1 ou la revendication 2, incluant en outre l'étape de la computation de temps de résidence modifiés par le dispositif à horloge transparente (6) en utilisant le biais estimé de l'horloge locale.

4. Procédé selon l'une quelconque des revendications précédentes dans lequel l'étape de l'estimation du biais de l'horloge locale inclut :

le calcul du biais $\alpha$ sous la forme :

$$\alpha = \frac{(T_{1,n} - T_{1,n-1}) + (d_{total,n} - d_{total,n-1})}{(T_{2TC,n} - T_{2TC,n-1})} - 1$$

dans laquelle $T_{1,n}$ n est le temps de départ du n-ième message de synchronisation envoyé depuis le dispositif maître (1) au dispositif esclave (3), $T_{2TC,n}$ est le temps d'arrivée du n-ième message de synchronisation, envoyé depuis le dispositif maître au dispositif esclave, au dispositif à horloge transparente (6), et $d_{total,n}$ est le retard total subi par le n-ième message de synchronisation dans le passage depuis le dispositif maître au dispositif à horloge transparente.

5. Procédé selon l'une quelconque des revendications 1 à 3 dans lequel l'étape de l'estimation du biais de l'horloge locale inclut l'exploitation d'un filtre de Kalman en utilisant l'équation de mesure

$$\underbrace{(T_{1,n} - T_{2TC,n}) + d_{total,n}}_{y_n} = \underbrace{\theta_n}_{D_n X_n} + v_n$$

et l'équation d'état

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

dans lesquelles $\theta_n$ et $\alpha_n$ sont le décalage et le biais totaux durant le n-ième exchange de messages de synchronisation, $T_{1,n}$ est le temps de départ du n-ième message de synchronisation envoyé depuis le dispositif maître (1) au dispositif esclave (3), $T_{2TC,n}$ est le temps d'arrivée du n-ième message de synchronisation, envoyé depuis le dispositif maître au dispositif esclave, au dispositif à horloge transparente (6), $d_{total,n}$ est le retard total incluant le temps de séjour cumulatif du *n*-ième message de synchronisation envoyé depuis le dispositif maître au dispositif esclave dans d'autres dispositifs à horloge transparente durant le déplacement entre le dispositif maître et le dispositif à horloge transparente, y = ($T_{1,n}$ - $T_{2TC,n}$) + $d_{total,n}$ est un scalaire, n est un indice de temps non négatif, $D_n$ = [2 0] est une matrice

$1 \times 2$, $X_n^T = \begin{bmatrix} \theta_n & \alpha_n \end{bmatrix}$ est un vecteur, $v_n$ est le bruit de mesure, et $w_n^T = \begin{bmatrix} w_{\theta,n} & w_{\alpha,n} \end{bmatrix}$ est un vecteur de bruit de processus.

6. Dispositif d'horloge transparente pair-à-pair (6) pour utilisation dans un réseau (2) entre un dispositif maître (1), ayant une horloge maîtresse (4), et un dispositif esclave (3), le dispositif à horloge transparente ayant :

    une horloge locale ; et
    un processeur,
    dans lequel le dispositif à horloge transparente (6) est agencé pour :

    recevoir et retransmettre des messages de synchronisation, envoyés depuis le dispositif maître (1) au dispositif esclave (3), par l'intermédiaire du réseau (2),
    et le processeur est agencé pour :

    extraire, à partir de messages de synchronisation envoyés depuis le dispositif maître (1) au dispositif esclave (3), les temps de l'envoi desdits messages de synchronisation ;
    enregistrer les temps de réception par le dispositif à horloge transparente (6) de messages de synchronisation envoyés depuis le dispositif maître (1) au dispositif esclave (3) ;
    extraire, à partir des messages de synchronisation, le retard total subi par chaque message de synchronisation dans le passage depuis le dispositif maître (1) au dispositif à horloge transparente (6), y compris le temps de séjour dans d'autres dispositifs à horloge transparente entre le dispositif maître et le dispositif à horloge transparente ;
    mesurer un temps de séjour de message pour un message de synchronisation passant à travers le dispositif à horloge transparente (6), modifier un champ de correction dans le message de synchronisation reçu avec au moins le temps de séjour de message mesuré pour générer un champ de correction modifié dans le message de synchronisation envoyé depuis le dispositif à horloge transparente au dispositif esclave (3) ; et
    estimer le biais de l'horloge locale dans le dispositif à horloge transparente (6) en comparaison avec l'horloge maîtresse (4) en utilisant une pluralité de chacun desdits temps extraits et enregistrés.

7. Dispositif d'horloge transparente (6) selon la revendication 6, dans lequel le processeur est en outre agencé pour régler l'horloge locale, dans le dispositif à horloge transparente, à l'horloge maîtresse (4).

8. Dispositif à horloge transparente (6) selon la revendication 6 ou la revendication 7, dans lequel le processeur est en outre agencé pour computer des temps de résidence modifiés, dans le dispositif à horloge transparente, en utilisant le biais estimé de l'horloge locale.

9. Dispositif d'horloge transparente (6) selon l'une quelconque des revendications 6 à 8, dans lequel le processeur est agencé pour estimer le biais de l'horloge locale par :

    le calcul du biais $\alpha$ sous la forme :

$$\alpha = \frac{(T_{1,n} - T_{1,n-1}) + (d_{total,n} - d_{total,n-1})}{(T_{2TC,n} - T_{2TC,n-1})} - 1$$

    dans laquelle $T_{1,n}$ n est le temps de départ du n-ième message de synchronisation envoyé depuis le dispositif maître (1) au dispositif esclave (3), $T_{2TC,n}$ est le temps d'arrivée du n-ième message de synchronisation, envoyé depuis le dispositif maître au dispositif esclave, au dispositif à horloge transparente (6), et $d_{total,n}$ est le retard total subi par le n-ième message de synchronisation dans le passage depuis le dispositif maître au dispositif à horloge transparente.

10. Dispositif d'horloge transparente (6) selon l'une quelconque des revendications 6 à 8, dans lequel le processeur est agencé pour estimer le biais de l'horloge locale en exploitant un filtre de Kalman en utilisant l'équation de mesure

$$\underbrace{\left(T_{1,n} - T_{2TC,n}\right) + d_{total,n}}_{y_n} = \underbrace{\theta_n}_{D_n X_n} + v_n$$

et l'équation d'état

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

dans lesquelles $\theta_n$ et $\alpha_n$ sont le décalage et le biais totaux durant le n-ième exchange de messages de synchronisation, $T_{1,n}$ est le temps de départ du n-ième message de synchronisation envoyé depuis le dispositif maître (1) au dispositif esclave (3), $T_{2TC,n}$ est le temps d'arrivée du n-ième message de synchronisation, envoyé depuis le dispositif maître au dispositif esclave, au dispositif à horloge transparente (6), $d_{total,n}$ est le retard total incluant le temps de séjour cumulatif du *n*-ième message de synchronisation envoyé depuis le dispositif maître au dispositif esclave dans d'autres dispositifs à horloge transparente durant le déplacement entre le dispositif maître et le dispositif à horloge transparente, y = $(T_{1,n} - T_{2TC,n}) + d_{total,n}$ est un scalaire, n est un indice de temps non négatif, $D_n$ = [2 0] est une matrice 1×2, $X_n^T = \begin{bmatrix} \theta_n & \alpha_n \end{bmatrix}$ est un vecteur, $v_n$ est le bruit de mesure, et $w_n^T = \begin{bmatrix} w_{\theta,n} & w_{\alpha,n} \end{bmatrix}$ est un vecteur de bruit de processus.

11. Système de temps en réseau incluant un dispositif maître (1), ayant une horloge maîtresse (4), et un dispositif esclave (3), un réseau (2) connectant le dispositif maître au dispositif esclave et un dispositif à horloge transparente pair-à-pair (6) situé dans le réseau entre le dispositif maître et le dispositif esclave et ayant une horloge locale, dans lequel :

   le dispositif maître (1) est agencé pour envoyer des messages de synchronisation par l'intermédiaire du réseau (2), les messages de synchronisation passant à travers ledit dispositif à horloge transparente (6) ;
   le dispositif maître (1) est agencé pour enregistrer des temps de l'envoi desdits messages de synchronisation, au dispositif maître ;
   le dispositif à horloge transparente (6) inclut une horloge locale et un processeur, et le processeur est agencé pour :

   extraire, à partir de messages de synchronisation envoyés depuis le dispositif maître (1) au dispositif esclave (3), les temps de l'envoi desdits messages de synchronisation ;
   enregistrer les temps de réception, par le dispositif à horloge transparente (6), de messages de synchronisation envoyés depuis le dispositif maître (1) au dispositif esclave (3) ;
   extraire, à partir des messages de synchronisation, le retard total subi par chaque message de synchronisation dans le passage depuis le dispositif maître (1) au dispositif à horloge transparente (6), y compris le temps de séjour dans d'autres dispositifs à horloge transparente entre le dispositif maître et le dispositif à horloge transparente ;
   mesurer un temps de séjour de message pour un message de synchronisation passant à travers le dispositif à horloge transparente (6), modifier un champ de correction dans le message de synchronisation reçu avec au moins le temps de séjour de message mesuré pour générer un champ de correction modifié dans le message de synchronisation, envoyé depuis le dispositif à horloge transparente, au dispositif esclave (3) ; et estimer le biais de l'horloge locale dans le dispositif à horloge transparente (6) en comparaison avec l'horloge maîtresse (4) en utilisant une pluralité de chacun desdits temps extraits et enregistrés.

12. Système de temps en réseau selon la revendication 11, dans lequel le processeur est en outre agencé pour régler l'horloge locale, dans le dispositif à horloge transparente (6), à l'horloge maîtresse (4).

13. Système de temps en réseau selon la revendication 11 ou la revendication 12, dans lequel le processeur est en outre agencé pour computer des temps de résidence modifiés, dans le dispositif à horloge transparente (6), en utilisant le biais estimé de l'horloge locale.

14. Système de temps en réseau selon l'une quelconque des revendications 11 à 13, dans lequel le processeur est agencé pour estimer le biais de l'horloge locale par :

le calcul du biais $\alpha$ sous la forme :

$$\alpha = \frac{(T_{1,n} - T_{1,n-1}) + (d_{total,n} - d_{total,n-1})}{(T_{2TC,n} - T_{2TC,n-1})} - 1$$

dans laquelle $T_{1,n}$ n est le temps de départ du n-ième message de synchronisation envoyé depuis le dispositif maître (1) au dispositif esclave (3), $T_{2TC,n}$ est le temps d'arrivée du n-ième message de synchronisation, envoyé depuis le dispositif maître au dispositif esclave, au dispositif à horloge transparente (6), et $d_{total,n}$ est le retard total subi par le n-ième message de synchronisation dans le passage depuis le dispositif maître au dispositif à horloge transparente.

15. Système de temps en réseau selon l'une quelconque des revendications 11 à 13, dans lequel le processeur est en outre agencé pour estimer le biais de l'horloge locale en exploitant un filtre de Kalman en utilisant l'équation de mesure

$$\underbrace{(T_{1,n} - T_{2TC,n}) + d_{total,n}}_{y_n} = \underbrace{\theta_n}_{D_n X_n} + v_n$$

et l'équation d'état

$$X_n = \begin{bmatrix} \theta_n \\ \alpha_n \end{bmatrix} = \begin{bmatrix} 1 & (T_{2TC,n} - T_{2TC,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = A_n X_{n-1} + w_n$$

dans lesquelles $\theta_n$ et $\alpha_n$ sont le décalage et le biais totaux durant le n-ième exchange de messages de synchronisation, $T_{1,n}$ est le temps de départ du n-ième message de synchronisation envoyé depuis le dispositif maître (1) au dispositif esclave (3), $T_{2TC,n}$ est le temps d'arrivée du n-ième message de synchronisation, envoyé depuis le dispositif maître au dispositif esclave, au dispositif à horloge transparente (6), $d_{total,n}$ est le retard total incluant le temps de séjour cumulatif du *n*-ième message de synchronisation envoyé depuis le dispositif maître au dispositif esclave dans d'autres dispositifs à horloge transparente durant le déplacement entre le dispositif maître et le dispositif à horloge transparente, y = $(T_{1,n} - T_{2TC,n}) + d_{total,n}$ est un scalaire, n est un indice de temps non négatif, $D_n$ = [2 0] est une matrice $1 \times 2$, $X_n^T = \begin{bmatrix} \theta_n & \alpha_n \end{bmatrix}$ est un vecteur, $v_n$ est le bruit de mesure, et $w_n^T = \begin{bmatrix} w_{\theta,n} & w_{\alpha,n} \end{bmatrix}$ est un vecteur de bruit de processus.

Figure 1

Local
Clock

Residence Time Bridge

Ingress
Port

PTP Message
Detect

Egress
Port

PTP Message
Transfer

Link Delay on
Ingress Port

Ingress Timestamp

+

-    +

Egress Timestamp

**Peer Link Delay +
Residence Time**

Read Correction Field

+

+

Update Correction Field

| .... | Correction Field | .... |
|------|------------------|------|

PTP Message

| .... | Correction Field | .... |
|------|------------------|------|

PTP Message

Figure 2

**P2P TC 1
Egress Port**

**P2P TC 2
Ingress Port**

$T_{p1}$

$Pdelay\_Req$

Link
Delay

$T_{p2}$

$T_{p3}$

Link
Delay

$Pdelay\_Resp$

$Pdelay\_Resp\_Follow\_Up$

$T_{p4}$

Figure 4

GrandMaster

Transparent
Clock 1

Transparent
Clock 2

Slave

$T_1$

Sync Message

Send
$T_1$

Propagation Time
$p_1$

Follow_Up Message
$T_1$

Residence Time
$r_1$

Sync Message

Propagation Time
$p_2$

Follow_Up Message
$T_1$
$p_1 + r_1$

Residence Time
$r_2$

Sync Message

$T_2$

Follow_Up Message
$T_1$
$p_1 + r_1 + p_2 + r_2$

Figure 3

Clock Reference
4

Equipment **With**
Transparent Clocks

Recovered Clock
5

PTP
Messages
6

6
2

Ethernet Network

PTP
Master

P2P
TC

P2P
TC

PTP
Slave

1

Link
Delay

Residence
Time

Link
Delay

Residence
Time

Link
Delay

2

Figure 5

EP 3 824 573 B1

Figure 6

Clock with no Offset

Clock with Offset

Figure 7

Figure 8

**REFERENCES CITED IN THE DESCRIPTION**

**Patent documents cited in the description**

- CN 102546142 A

- US 2016170439 A

**Non-patent literature cited in the description**

- **J. HAN et al.** Practical considerations in the design and implementation of time synchronization systems using IEEE 1588. IEEE Communications Magazine, 01 November 2009, vol. 47, 164-170

- **R. E. KALMAN**. A New Approach to Linear Filtering and Prediction Problems. *Transaction of the ASME-Journal of Basic Engineering*, March 1960, 35-45